# FASCICULE DE BREVET EUROPEEN

(11) **EP 1 260 164 B1**
(45) Date de publication et mention de la délivrance du brevet: **25.06.2003**
(21) Numéro de dépôt: 02356073.3
(22) Date de dépôt: 23.04.2002
(51) Int. Cl.: A47J 27/04, A47J 27/21

(54) **Appareil électroménager de cuisson à la vapeur a dégagement de vapeur réduit**
Küchengerät zum Dampfkochen mit limitierter Dampfausgabe
Household appliance for steam cooking with a reduced vapour outlet

(30) Priorité: 26.04.2001 FR 0105647
(43) Date de publication de la demande: 27.11.2002
(73) Titulaire: SEB S.A., 69130 Ecully (FR)
(72) Inventeur: Pretre, Nicolas, 21000 Dijon (FR)
(74) Mandataire: Kiehl, Hubert

(56) Documents cités:
- EP-A- 0 664 097
- EP-A- 0 832 590
- DE-A- 19 709 943
- GB-A- 2 198 631
- GB-A- 2 332 095

## Description

La présente invention se rapporte au domaine technique général des appareils électroménagers prévus pour la cuisson à la vapeur.

D'une manière générale, les cuiseurs vapeur comportent une enceinte de cuisson associée à un réservoir d'eau, l'eau du réservoir étant chauffée pour produire la vapeur servant à cuire les aliments contenus dans l'enceinte de cuisson. Les appareils électriques de cuisson à la vapeur comportent un moyen de chauffage électrique pour la production de vapeur à partir de l'eau du réservoir.

Lorsque l'eau a atteint sa température d'ébullition, la vapeur est produite en quantité importante. Un appareil électrique de cuisson à la vapeur présentant une puissance de chauffe élevée présente l'avantage d'atteindre rapidement le point d'ébullition, et de produire de la vapeur en grande quantité. Toutefois une partie de la vapeur risque alors de ne pas être utilisée pour le chauffage des aliments. Il en résulte un débit de vapeur plus ou moins important à l'extérieur de l'appareil, ainsi qu'une perte d'énergie.

Le document GB 2 198 631 propose d'utiliser un détecteur de vapeur pour réduire la puissance de chauffe, de manière à éviter une production excessive de vapeur. Un inconvénient de l'appareil décrit dans ce document réside dans le fait que la vapeur atteint le détecteur de vapeur sans avoir traversé l'enceinte de cuisson. Ainsi la réduction de la puissance de chauffe ne tient pas compte des aliments présents dans l'enceinte de cuisson. Un autre inconvénient de l'appareil décrit dans ce document réside dans le fait que l'élément chauffant est disposé dans le réservoir d'eau principal. Il en résulte que la vitesse de montée en température de l'eau contenue dans le réservoir reste limitée même avec une puissance importante, et que la production de vapeur est longue à intervenir.

Le but de la présente invention est de proposer un appareil électroménager de cuisson à la vapeur, qui concilie une cuisson performante avec une limitation des rejets de vapeur à l'extérieur de l'appareil.

Un but complémentaire de la présente invention est de proposer un appareil électroménager de cuisson à la vapeur du type précité, qui soit d'une construction économique.

Un but complémentaire de la présente invention est de proposer un appareil électroménager de cuisson à la vapeur du type précité, dont l'utilisation soit simple.

Cet objet est atteint avec un appareil électroménager de cuisson à la vapeur comportant un dispositif de production de vapeur comprenant un réservoir d'eau associé à des moyens de chauffe, une enceinte de cuisson alimentée en vapeur par le dispositif de production de vapeur, et un détecteur de vapeur associé à des moyens pour réduire la puissance des moyens de chauffe, l'enceinte de cuisson comportant au moins un échappement vers l'extérieur, du fait que l'enceinte de cuisson communique par un conduit descendant avec une chambré de l'appareil dans laquelle est disposé le détecteur de vapeur.

Des essais ont montré qu'il existe lors de la cuisson un décalage temporel entre l'apparition d'un débit de vapeur important dans l'appareil et la sortie d'un débit de vapeur important de l'appareil. En effet, au début de la cuisson, les aliments commencent par absorber en grande partie la vapeur, et leur température augmente. Tant que les aliments absorbent la majeure partie de la vapeur produite, les quantités de vapeur excédentaires sortent sans difficulté de l'enceinte de cuisson par le ou les échappements. Lorsque la température de surface des aliments se rapproche de la température de la vapeur, la capacité d'absorption des calories de la vapeur par les aliments diminue, et la quantité de vapeur s'échappant de l'enceinte de cuisson tend à augmenter.

Toutefois, quand les quantités de vapeur excédentaires deviennent plus importantes, le ou les échappements limitent le débit d'évacuation. La vapeur doit alors descendre par le conduit pour rejoindre le détecteur commandant la réduction de puissance de l'élément chauffant. De ce fait, la vapeur parvenue dans l'enceinte de cuisson n'atteint pas immédiatement le détecteur. La cuisson peut donc se poursuivre à pleine puissance plus longtemps, ce qui améliore l'efficacité de l'appareil.

Dans une deuxième étape, le débit de vapeur généré à puissance réduite permet de fournir les calories nécessaires à la poursuite de la cuisson, sans déperditions excessives.

Par rapport à un appareil fournissant de manière continue la puissance de chauffe réduite, la durée de la cuisson est réduite. Les rejets de vapeur vers l'extérieur sont supérieurs seulement dans la phase de transition servant à déclencher le détecteur de vapeur. La montée plus rapide en température des aliments doit contribuer à une meilleure conservation des vitamines.

Par rapport à un appareil fournissant de manière continue la puissance maximale, la durée de cuisson reste identique mais les rejets de vapeur sont moins importants dans la deuxième partie de la cuisson lorsque les aliments sont montés en température. Du fait de la moindre consommation d'eau dans la deuxième partie de la cuisson, l'autonomie de l'appareil est augmentée.

Avantageusement, le dispositif de production de vapeur comporte un réservoir principal alimentant le réservoir d'eau associé aux moyens de chauffe, cette disposition permettant d'obtenir plus rapidement de la vapeur et de moduler plus facilement le débit de vapeur entre la pleine puissance de l'élément chauffant et la puissance réduite.

Selon une disposition avantageuse facilitant notamment le nettoyage de l'enceinte de cuisson, le dispositif de production de vapeur est agencé dans une base chauffante, et l'enceinte de cuisson est amovible par rapport à la base chauffante.

Avantageusement alors, le détecteur de vapeur est disposé dans la base chauffante. Cette disposition facilite la transmission de l'information fournie par le détecteur de vapeur pour réduire la puissance des moyens de chauffe. Cette disposition facilite également le nettoyage de l'enceinte de cuisson.

Avantageusement, le conduit descendant est ménagé au moins en partie dans une paroi latérale de l'enceinte de cuisson. Cette disposition permet de recueillir la vapeur dans la partie supérieure de l'enceinte de cuisson, après la traversée des aliments. Tant que les aliments absorbent suffisamment la vapeur et que les échappements permettent l'évacuation de la vapeur restante, la pleine puissance peut être conservée. Il en résulte une plus grande rapidité de cuisson.

Avantageusement alors, l'enceinte de cuisson comporte au moins deux récipients de cuisson amovibles comportant chacun une partie du conduit descendant. Cette disposition permet d'utiliser un ou plusieurs récipients de cuisson.

Avantageusement, le conduit descendant est ménagé au moins en partie dans la base chauffante. Cette disposition permet de simplifier la réalisation de l'enceinte de cuisson, le détecteur de vapeur pouvant alors être agencé dans la base chauffante.

Avantageusement, pour permettre d'évacuer les condensats, la chambre est reliée à une sortie d'écoulement vers l'extérieur de l'appareil.

Avantageusement, le conduit descendant est relié à l'enceinte de cuisson par une entrée agencée plus bas que le ou les échappements. Cette disposition favorise l'évacuation de la vapeur par les échappements et permet de retarder la progression de la vapeur dans le conduit descendant.

Avantageusement le conduit descendant est relié à l'enceinte de cuisson par une entrée dont la section est supérieure à la somme des sections du ou des échappements. Lorsque le débit de vapeur devient trop important pour s'écouler en totalité par le ou les échappements, cette disposition favorise la progression de la vapeur dans le conduit descendant.

Avantageusement le conduit descendant est relié à l'enceinte de cuisson par une entrée agencée à proximité de l'un au moins des échappements. Cette disposition permet de réduire la plage de débit de vapeur nécessaire pour le déclenchement du détecteur.

Avantageusement alors l'un au moins des échappements est agencé à distance de l'entrée. Il a été observé que cette configuration permettait de réduire le seuil de débit de vapeur nécessaire pour le déclenchement du détecteur.

Avantageusement alors, le rapport entre la section du ou des échappements agencés à distance de l'entrée et la section du ou des échappements agencés à proximité de l'entrée est compris entre 1,6 et 2,4. Cette disposition permet d'obtenir un seuil de détection relativement stable.

Avantageusement le ou l'un au moins des échappements est ménagé dans un couvercle formant la paroi supérieure de l'enceinte de cuisson. Cette disposition contribue à favoriser l'évacuation de la vapeur par le ou les échappements concernés.

Avantageusement alors le conduit descendant présente une entrée agencée plus bas que le ou les échappements ménagés dans le couvercle. Cette disposition facilite la réalisation du couvercle et du conduit.

Avantageusement alors l'enceinte de cuisson comporte un récipient de cuisson dans lequel est ménagé au moins une portion du conduit descendant et le ou l'un des échappements agencés à proximité de l'entrée forme un orifice susceptible de s'emboîter sur le bord supérieur dudit conduit lorsque le couvercle est retourné sur ledit récipient. Cette disposition permet d'améliorer le rangement de l'appareil.

Avantageusement encore l'entrée est formée par une ouverture supérieure du conduit descendant et le sommet de la paroi intérieure du couvercle est concave jusqu'à une nervure interposée entre le sommet du couvercle et le ou l'un des échappements, la nervure étant agencée autour de l'entrée lorsque le couvercle ferme l'enceinte de cuisson. Cette disposition permet d'éviter la retombée des condensats dans le conduit descendant.

Avantageusement le rapport entre la puissance moyenne délivrée par les moyens de chauffe pendant la phase initiale de montée en température et la puissance moyenne délivrée par les moyens de chauffe après le déclenchement du détecteur de vapeur est supérieur ou égal à 1,5, et de préférence supérieur ou égal à 2. Cette disposition permet de bénéficier d'une durée de montée en température plus réduite.

Selon une autre caractéristique, un passage intermédiaire relie l'enceinte de cuisson à la chambre inférieure. En d'autres termes, le passage intermédiaire est agencé plus haut que la chambre inférieure. La vapeur descend par le passage intermédiaire vers la chambre inférieure, le passage intermédiaire pouvant être formé par un ou plusieurs orifices dans la paroi de l'enceinte de cuisson.

Avantageusement, le ou au moins l'un des échappements relie l'enceinte de cuisson à l'extérieur par le passage intermédiaire. Cette disposition permet d'améliorer la précision du déclenchement du détecteur. En effet, un flux de vapeur s'échappe de l'enceinte de cuisson vers l'extérieur, en passant d'abord par le passage intermédiaire, puis par ledit ou lesdits échappements. Lorsque le débit de vapeur devient plus important, l'écoulement de la vapeur devient turbulent. Une partie de la vapeur se dirige alors vers la chambre inférieure dans laquelle est disposé le détecteur de vapeur.

Avantageusement alors, la section du passage intermédiaire est supérieure à 90% de la section dudit ou desdits échappements. Cette disposition facilite l'écoulement d'une partie de la vapeur vers la chambre inférieure lorsque le débit de vapeur devient plus important.

Avantageusement encore, le passage intermédiaire s'étend sur une largeur supérieure à la largeur dudit ou desdits échappements. Cette disposition facilite également l'écoulement d'une partie de la vapeur vers la chambre inférieure lorsque le débit de vapeur devient plus important.

Avantageusement, le passage intermédiaire est agencé dans la partie supérieure de l'enceinte de cuisson. La vapeur ayant d'abord contourné les aliments à cuire avant de traverser le passage intermédiaire, la réduction de puissance de l'élément chauffant commandée par la détection de la vapeur intervient lorsque toute l'enceinte de cuisson et son contenu sont saturés de vapeur. Cette disposition permet de réduire la durée de cuisson, car la puissance maximale des moyens de chauffe est conservée le plus longtemps possible. Par rapport à un appareil de puissance maximale identique, dans lequel la puissance maximale est conservée tout au long de la cuisson, les performances de cuisson sont identiques mais l'énergie consommée totale est moindre et les rejets de vapeur à l'extérieur de l'enceinte de cuisson sont notoirement diminués.

L'invention sera mieux comprise à l'étude de trois exemples de réalisation, pris à titre nullement limitatif, et illustrés dans les figures annexées dans lesquelles :
- la figure 1 est une vue en coupe d'un premier exemple de réalisation d'un appareil électroménager de cuisson à la vapeur selon l'invention,
- la figure 2 est un schéma électrique partiel de l'appareil montré à la figure 1,
- la figure 3 est une vue schématique d'un deuxième exemple de réalisation d'un appareil électroménager de cuisson à la vapeur selon l'invention,
- la figure 4 est une vue en coupe longitudinale d'un troisième exemple de réalisation d'un appareil électroménager de cuisson à la vapeur selon l'invention, dans une position de cuisson,
- la figure 5 est une vue en coupe longitudinale d'un troisième exemple de réalisation d'un appareil électroménager de cuisson à la vapeur selon l'invention, dans une position de rangement,
- la figure 6 est une vue en coupe transversale de la base du troisième exemple de réalisation illustré aux figures 4 et 5,
- la figure 7 est une vue de dessous du couvercle du troisième exemple de réalisation illustré aux figures 4 à 6.

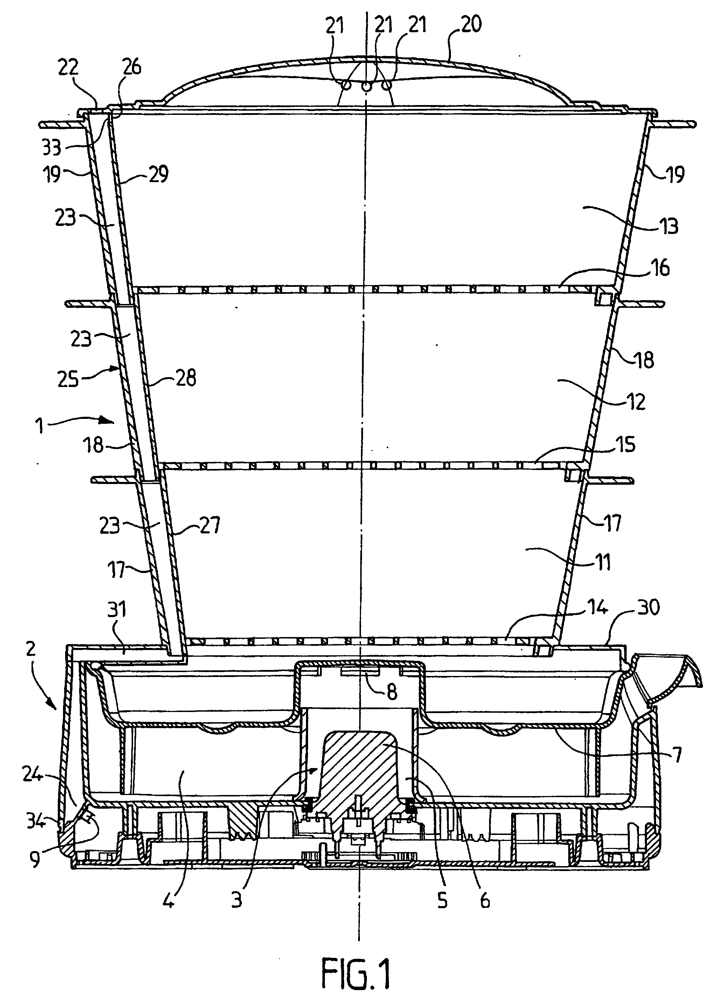

La figure 1 montre un appareil électroménager de cuisson à la vapeur, comportant une enceinte de cuisson 1 disposée de manière amovible au dessus d'une base chauffante 2.

L'enceinte de cuisson 1 comporte trois récipients de cuisson 11, 12, 13 superposés, comportant chacun un fond perforé amovible 14, 15, 16, et des montants annulaires 17, 18, 19. Les récipients de cuisson montrés à la figure 1 sont emboîtables. Un couvercle 20 ferme le récipient supérieur 13.

La base chauffante 2 comporte un dispositif de production de vapeur 3 comprenant un réservoir d'eau principal 4 alimentant un réservoir d'eau secondaire 5 associé à des moyens de chauffe 6. Un récipient récupérateur de jus 7 pourvu d'ouvertures 8 pour le passage de la vapeur est disposé au dessus de la base chauffante.

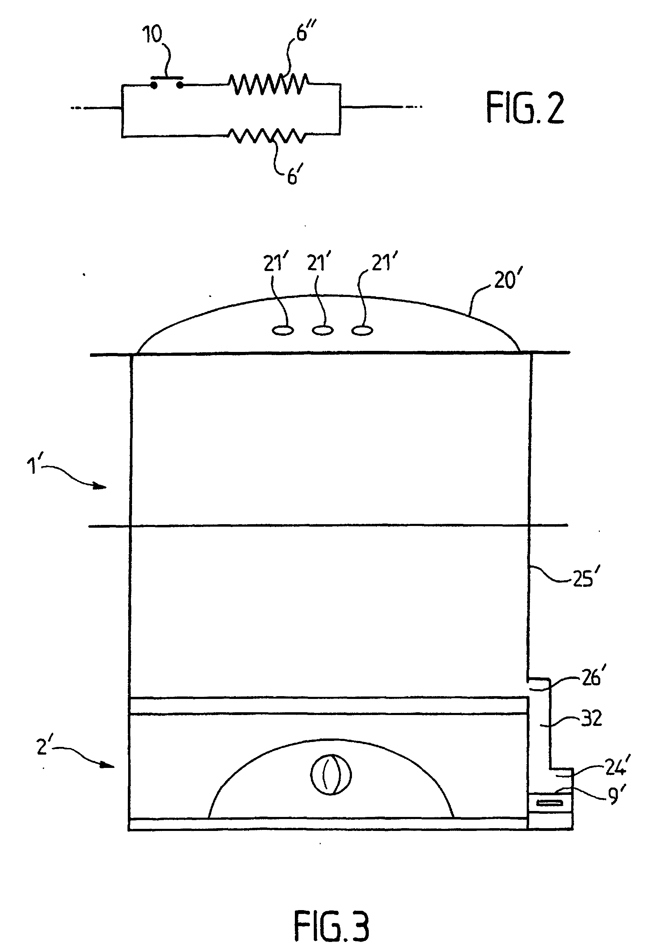

Les moyens de chauffe 6 sont formés par un élément chauffant à deux enroulements. Le premier enroulement 6' présente par exemple une puissance de 650 W et le deuxième enroulement 6" présente par exemple une puissance de 1300 W. Un détecteur de vapeur 9 est associé à des moyens pour réduire la puissance des moyens de chauffe 6. Le détecteur de vapeur 9 est par exemple formé par un interrupteur thermostatique 10 monté sur l'alimentation du deuxième enroulement 6", tel que montré à la figure 2.

Des échappements directs 21 sont agencés dans la paroi du couvercle 20 fermant l'enceinte de cuisson 1. Un'échappement indirect 22 est agencé dans la paroi du couvercle 20 fermant un conduit 23 relié à une chambre inférieure 24 de l'appareil, agencée dans la base chauffante 2. Le conduit 23 est ménagé dans une paroi latérale 25 de l'enceinte de cuisson 1. Le détecteur de vapeur 9 est disposé dans la base chauffante 2. Tel que bien visible à la figure 1, le conduit 23 est un conduit descendant. Le détecteur de vapeur 9 est disposé dans la chambre 24. Une sortie d'écoulement 34 vers l'extérieur de l'appareil est ménagée dans le fond de la chambre 24.

Le conduit 23 est délimité dans chacun des récipients de cuisson 11, 12, 13, d'une part par les montants latéraux 17, 18, 19 et d'autre part par une paroi intérieure 27, 28, 29. Un passage intermédiaire 26 est ménagé entre l'enceinte de cuisson 1 et le conduit 23. Plus précisément, le passage intermédiaire 26 est formé par une entaille dans la partie supérieure de la paroi intérieure 29 appartenant au récipient de cuisson supérieur 13. La section du passage intermédiaire 26 est sensiblement identique à la section de l'échappement indirect 22. Toutefois, la largeur du passage intermédiaire 26 est plus importante que la largeur de l'échappement indirect 22. Le passage intermédiaire 26 forme l'entrée 33 du conduit descendant 23. Tel que bien visible à la figure 1, l'échappement 22 est agencé à proximité de l'entrée 33 alors que les échappements 21 sont agencés à distance de l'entrée 33. L'entrée 33 est agencée plus bas que les échappements 21, 22.

Le récipient de cuisson inférieur 11 repose sur une pièce annulaire 30 posée sur le récipient récupérateur de jus 7. Un conduit 31 agencé dans la pièce annulaire 30 relie le conduit 23 de l'enceinte de cuisson 1 à la chambre inférieure 24 agencée dans la base chauffante 2.

Le fonctionnement de l'appareil est le suivant. L'utilisateur dispose les aliments à cuire à la vapeur sur les fonds perforés 14, 15, 16 des récipients de l'enceinte de cuisson 1. A la mise en route de l'appareil, l'interrupteur thermostatique 10 est en position fermée et les deux enroulements 6', 6" des moyens de chauffe 6 sont alimentés. Tant que les aliments présents dans l'enceinte de cuisson 1, voire l'enceinte de cuisson elle-même, ne sont pas montés en température, la quantité de vapeur émise par les échappements 21 est faible.

Lorsque les aliments, voire l'enceinte de cuisson, sont montés en température, les calories apportées par la vapeur sont plus difficilement transférées, et le débit de vapeur sortant par les échappements 21 augmente. La vapeur s'échappe également par le passage 26. Toutefois, tant que l'écoulement reste non turbulent, la vapeur passant par le passage 26 sort par l'échappement 22.

Lorsque le débit de vapeur à travers le passage 26 devient plus important, l'écoulement de la vapeur tend à devenir turbulent. La vapeur issue du passage 26 sort plus difficilement par l'échappement 22, notamment du fait de la largeur du passage 26 plus importante que la largeur de l'échappement 22. Une partie de la vapeur progresse alors dans le conduit 23 puis dans le conduit 31 pour atteindre la chambre inférieure 24 dans laquelle est logé le détecteur de vapeur 9. L'élévation de température due à l'arrivée de la vapeur provoque l'ouverture de l'interrupteur thermostatique 10. Le second enroulement 6" est déconnecté et la cuisson se poursuit à puissance réduite.

Ainsi la montée en température peut être effectuée rapidement tout en limitant les rejets de vapeur à l'extérieur de l'appareil lors de la poursuite de la cuisson, de manière optimisée, quels que soient les aliments présents dans l'enceinte de cuisson. Un dégagement important de vapeur n'est susceptible d'intervenir que pendant une durée limitée, lorsque la vapeur produite n'est plus absorbée par la montée en température des aliments et de l'enceinte de cuisson, et n'a pas encore atteint le détecteur de vapeur.

Un autre exemple de réalisation est montré de manière schématique à la figure 3. Cet exemple de réalisation diffère de l'exemple de réalisation précédent notamment en ce que l'enceinte de cuisson 1' est dépourvue de conduit. De ce fait, le couvercle 20' est dépourvu d'échappement indirect.

Le détecteur de vapeur 9' est logé dans une chambre inférieure 24' agencée dans la base chauffante 2'. La chambre 24' est reliée à l'enceinte de cuisson 1' par un conduit 32 ménagé dans la base chauffante 2'. Le conduit 32 communique avec l'enceinte de cuisson 1' par un passage intermédiaire 26' ménagé dans la partie inférieure de la paroi latérale 25' de l'enceinte de cuisson.

Le fonctionnement de cet exemple de réalisation est voisin de celui de l'exemple de réalisation précédent. Toutefois, du fait que le passage intermédiaire est ménagé dans la partie inférieure de l'enceinte de cuisson, la vapeur tend à emprunter le passage intermédiaire de manière plus précoce que lorsque le passage intermédiaire est ménagé dans la partie supérieure de l'enceinte de cuisson. Il en résulte un temps de cuisson un peu plus long du fait de la réduction de la phase initiale de fonctionnement à pleine puissance. Par contre le dégagement de vapeur à l'extérieur de l'appareil avant le déclenchement du détecteur peut être un peu réduit.

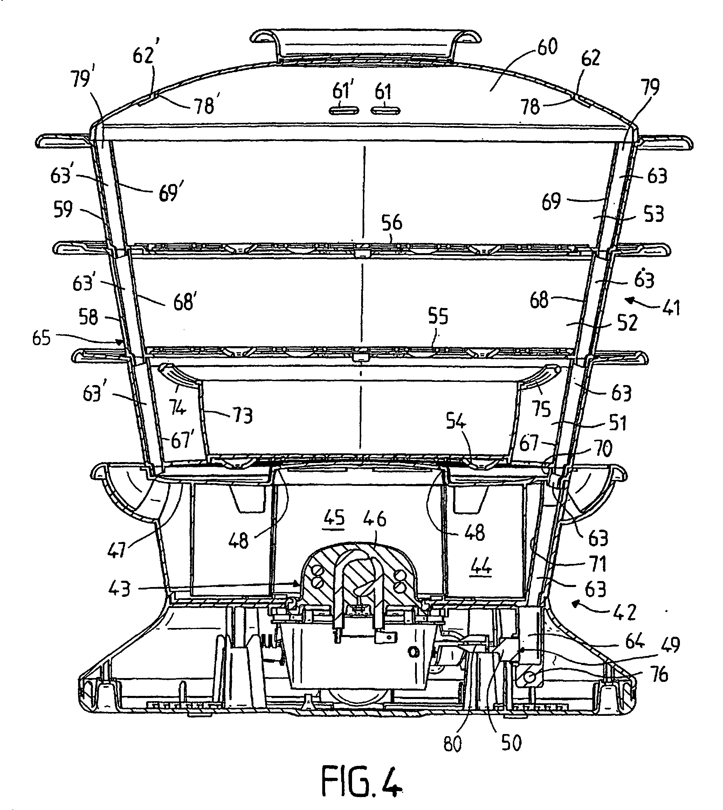

Un troisième exemple de réalisation d'un appareil électroménager de cuisson à la vapeur selon l'invention est illustré aux figures 4 à 7.

Tel que monté à la figure 4, l'appareil comporte une enceinte de cuisson 41 amovible par rapport à une base chauffante 42. L'enceinte de cuisson 41 comprend trois récipients de cuisson 51, 52, 53 superposés fermés par un couvercle 60. Le récipient de cuisson médian 52 et le récipient de cuisson supérieur 53 comportent chacun un fond perforé amovible 55, 56 monté sur un montant annulaire 58, 59. Un bol à riz 73 comportant deux poignées 74, 75 repose sur le fond perforé 54 du récipient de cuisson inférieur 51.

L'enceinte de cuisson 41 repose sur un récipient récupérateur de jus 47 comportant des ouvertures de passage de vapeur 48. La base chauffante 42 comprend un dispositif de production de vapeur 43 comportant un réservoir d'eau froide 44 alimentant un réservoir 45 dans lequel sont agencés des moyens de chauffe 46 présentant deux enroulements de 1350 W et 650 W.

Le couvercle 60 comporte deux échappements 61, 61' agencés côte à côte ainsi que deux échappements 62, 62' agencés de manière diamétralement opposée, tel que mieux visible à la figure 7. Le rapport entre la section des deux échappements 61, 61' et la section de l'un des échappements 62, 62' est de l'ordre de 1.

Chacun des récipients de cuisson 51, 52, 53, le récipient récupérateur de jus 47 et la base chauffante 42 comportent une paroi intérieure 67, 68, 69, 70, 71 formant une portion d'un conduit descendant 63 reliant l'enceinte de cuisson 41 à une chambre 64 agencée dans la base 42. Ainsi le conduit 63 est ménagé au moins en partie dans une paroi latérale 65 de l'enceinte de cuisson 41. Le conduit est également ménagé au moins en partie dans la base chauffante 42.

Les récipients de cuisson comportent chacun une paroi intérieure 67', 68', 69' symétrique à la paroi 67, 68, 69. Toutefois le conduit descendant 63' formé par les parois 67', 68', 69' s'arrête au niveau du récipient récupérateur de jus 47.

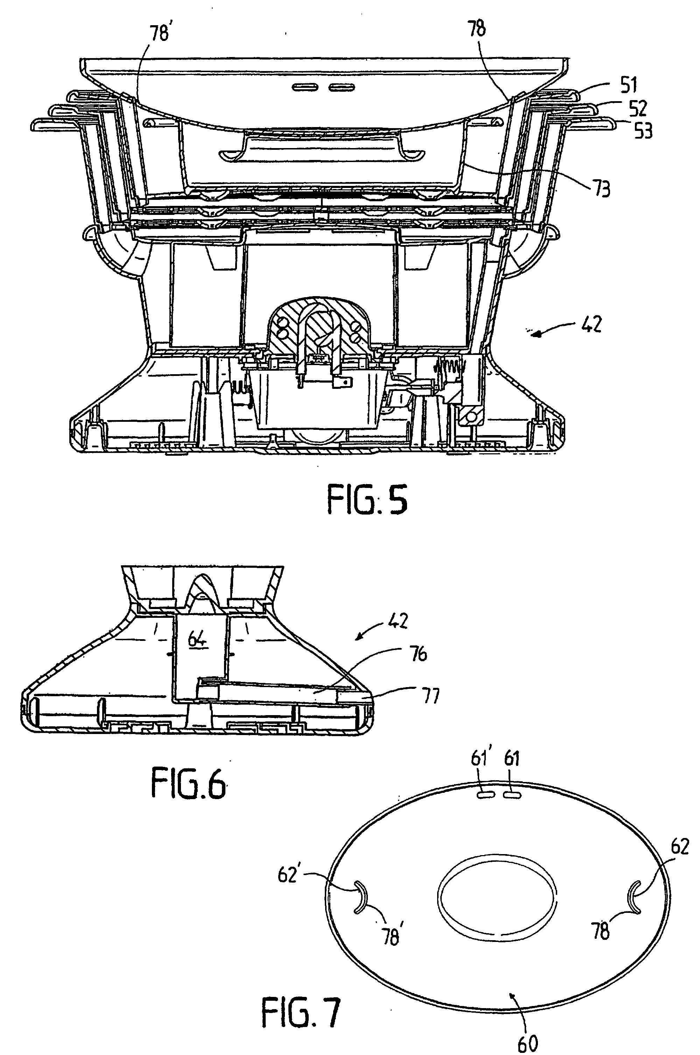

Dans la paroi latérale de la chambre inférieure 64 est disposé un interrupteur thermostatique 50 monté en série avec l'enroulement le plus puissant. L'interrupteur thermostatique 50 forme un détecteur de vapeur 49. L'interrupteur thermostatique 50 présente un réarmement manuel et peut être réarmé après déclenchement au moyen d'une commande 80 comportant un bouton de réarmement accessible de l'extérieur de l'appareil. Un conduit d'évacuation 76 relie la chambre 64 à une sortie d'écoulement 77 vers l'extérieur de l'appareil, tel que mieux visible à la figure 6. La sortie 77 est ménagée dans la paroi latérale de la base 42.

On remarquera sur les figures 4 et 7 qu'une nervure 78, 78' est interposée entre le sommet de la paroi intérieure du couvercle 60, d'une part, et l'échappement 62, ou l'échappement 62', d'autre part. La partie supérieure de la paroi inférieure du couvercle 60 est concave.

Les conduits descendants 63, 63' sont reliés à l'enceinte de cuisson 41 par une entrée 79, 79'. La section de l'une et l'autre des entrées 79, 79' est supérieure à la somme des sections des échappements 61, 61', 62, 62'. Les entrées 79, 79' sont agencées plus bas que les échappements 61, 61', 62, 62'. Les entrées 79, 79' forment un passage intermédiaire entre l'enceinte de cuisson 41 et les conduits 63, 63'. L'entrée de la portion de conduit descendant 63, 63' de chaque récipient de cuisson 51, 52, 53 est formée par une ouverture supérieure.

Les nervures 78, 78' sont agencées autour de l'ouverture supérieure des conduits descendants 63, 63' lorsque le couvercle 60 ferme l'enceinte de cuisson 41. Le couvercle 60 peut alors reposer sur le récipient 53, tel que montré à la figure 4, sur le récipient 52 ou sur le récipient 51. Les nervures 78, 78' permettent de dévier les condensats s'écoulant sous la paroi inférieure du couvercle 60 et ainsi d'éviter que des gouttes de condensats ne tombent dans les conduits 63, 63'.

On remarquera également que dans la position de rangement illustrée à la figure 5, les échappements 62, 62' forment chacun un orifice susceptible de s'emboîter sur le bord supérieur de la paroi 67, 67' lorsque le couvercle 60 est retourné sur le récipient 51. Les récipients de cuisson 51, 52, 53 placés dans l'ordre inverse à celui utilisé pour la cuisson, permettent de réduire la hauteur de l'appareil lorsque celui-ci n'est pas utilisé. Dans la position de cuisson, le couvercle 60 et chacun des récipients 51, 52, 53 peuvent occuper une position tournée de 180° autour de la verticale sans entraver le fonctionnement de l'invention, du fait de la présence des deux conduits 63, 63' dans les récipients et des deux échappements 62, 62' dans le couvercle.

Le fonctionnement de ce troisième exemple de réalisation est voisin de celui du premier exemple de réalisation. Au début du fonctionnement de l'appareil le débit de vapeur hors de l'enceinte de cuisson augmente progressivement puis se stabilise entre 5 et 10 g de vapeur par minute. Ce seuil correspond à la montée en température progressive des aliments. Lorsque la température des aliments rejoint celle de l'enceinte de cuisson, le débit de vapeur augmente de façon importante. Pour une puissance de chauffe continue de 2000 W, le débit de vapeur peut atteindre jusqu'à 40 à 50 g/min. Le détecteur de vapeur 49 formé par l'interrupteur thermostatique 50 permet de commander la réduction des moyens de chauffe 46 de 2000 W à 650 W. Le débit de vapeur retombe alors à une valeur comprise entre 5 et 10 g/min qui reste acceptable pour une utilisation domestique. Dès la coupure de l'interrupteur thermostatique 50, la quantité de vapeur produite diminue rapidement et le conduit descendant 63 n'est plus alimenté en vapeur.

La puissance de chauffe plus élevée disponible au début de la cuisson permet de réduire la durée de cuisson, puisque les aliments montent plus vite en température. Du fait que les températures finalement atteintes restent les même qu'avec une cuisson à la vapeur effectuée entièrement à puissance réduite, mais que la durée d'exposition des aliments aux températures de cuisson est moindre, un impact favorable sur la conservation des vitamines est attendu.

Avec une puissance de chauffe initiale en deçà de 1,5 fois la puissance réduite, le gain de temps est faible si la puissance de chauffe initiale est faible, ou les sorties de vapeur restent trop importantes à puissance réduite, si la puissance de chauffe initiale est élevée. Une puissance de chauffe initiale correspondant à deux fois la puissance réduite permet d'obtenir des résultats significatifs. Avec une puissance de chauffe initiale équivalent au triple de la puissance réduite, il est possible d'obtenir une cuisson plus rapide ainsi qu'une détection aisée de l'augmentation de la production de vapeur lorsque les aliments sont montés en température.

L'invention n'est pas limitée aux exemples de réalisation décrits. Notamment, un échappement pourrait être ménagé dans le conduit 32 du deuxième exemple de réalisation après le passage 26'. Dans le troisième exemple de réalisation, les parois 67', 68', 69' pourraient être supprimées, et/ou l'échappement 62. Le nombre et/ou la forme et/ou la disposition des échappements peuvent être modifiés sans sortir du cadre de l'invention.

De manière plus générale, l'enceinte de cuisson peut comporter un ou plusieurs récipients de cuisson. Les récipients de cuisson peuvent être interchangeables. Le détecteur de vapeur n'est pas nécessairement un interrupteur thermostatique, mais peut être de tout type, notamment un capteur de débit ou un capteur d'humidité. Le conduit peut appartenir seulement à la base chauffante. La puissance des moyens de chauffe peut être réglée par des moyens électroniques. La variation de puissance des moyens de chauffe peut être obtenue par une alternance de périodes de chauffe à pleine puissance et de périodes d'arrêt. Toutefois une simple commutation entre une puissance initiale et une puissance réduite peut suffire. Le ou les échappements ne sont pas nécessairement ménagés dans la partie supérieure de l'enceinte de cuisson, mais peuvent notamment être réalisés sur une face latérale de l'enceinte de cuisson. La chambre inférieure dans laquelle est disposé le détecteur de vapeur peut être coudée et présenter un point bas entre le passage intermédiaire et le détecteur ou entre l'entrée du conduit descendant et le détecteur. Le détecteur de vapeur n'est pas nécessairement agencé dans la base chauffante, mais peut par exemple être disposé sur l'enceinte de cuisson. Par ailleurs, l'enceinte de cuisson peut être en partie solidaire du dispositif de production de vapeur.

De nombreuses améliorations peuvent être apportées à ces appareils dans le cadre des revendications.

## Revendications

1. Appareil électroménager de cuisson à la vapeur, comportant un dispositif de production de vapeur (3 ; 43) comprenant un réservoir d'eau (5 ; 45) associé à des moyens de chauffe (6 ; 46), une enceinte de cuisson (1 ; 1'; 41) alimentée en vapeur par le dispositif de production de vapeur, et un détecteur de vapeur (9 ; 9'; 49) associé à des moyens pour réduire la puissance des moyens de chauffe, l'enceinte de cuisson (1 ; 1'; 41) comportant au moins un échappement (21 , 22 ; 21'; 61, 61', 62, 62') vers l'extérieur, **caractérisé en ce que** l'enceinte de cuisson (1; 1'; 41) communique par un conduit descendant (23 ; 32 ; 63) avec une chambre (24 ; 24'; 64) de l'appareil dans laquelle est disposé le détecteur de vapeur (9 ; 9' ; 49).

2. Appareil électroménager de cuisson à la vapeur selon la revendication 1, **caractérisé en ce que** le dispositif de production de vapeur (3 ; 43) comporte un réservoir principal (4 ; 44) alimentant le réservoir d'eau (5 ; 45) associé aux moyens de chauffe (6 ; 46).

3. Appareil électroménager de cuisson à la vapeur selon l'une des revendications 1 ou 2, **caractérisé en ce que** le dispositif de production de vapeur (3 ; 43) est agencé dans une base chauffante (2 ; 2' ; 42), et que l'enceinte de cuisson (1; 1'; 41) est amovible par rapport à la base chauffante (2 ; 2' ; 42).

4. Appareil électroménager de cuisson à la vapeur selon la revendication 3, **caractérisé en ce que** le détecteur de vapeur (9 ; 9' ; 49) est disposé dans la base chauffante (2 ; 2' ; 42).

5. Appareil électroménager de cuisson à la vapeur selon l'une des revendications 1 à 4, **caractérisé en ce que** le conduit descendant (23 ; 63) est ménagé au moins en partie dans une paroi latérale (25 ; 65) de l'enceinte de cuisson (1).

6. Appareil électroménager de cuisson à la vapeur selon la revendication 5, **caractérisé en ce que** l'enceinte de cuisson (1 ; 41) comporte au moins deux récipients de cuisson amovibles (11, 12, 13 ; 51, 52, 53) comportant chacun une partie du conduit descendant (23 ; 63).

7. Appareil électroménager de cuisson à la vapeur selon l'une des revendications 1 à 6, **caractérisé en ce que** le conduit descendant (32 ; 63) est ménagé au moins en partie dans la base chauffante (2' ; 42).

8. Appareil électroménager de cuisson à la vapeur selon l'une des revendications 1 à 7, **caractérisé en ce que** la chambre (24 ; 64) est reliée à une sortie d'écoulement (34 ; 76) vers l'extérieur de l'appareil.

9. Appareil électroménager de cuisson à la vapeur selon l'une des revendications 1 à 8, **caractérisé en ce que** le conduit descendant (23 ; 63) est relié à l'enceinte de cuisson (1 ; 41) par une entrée (33 ; 79) agencée plus bas que le ou les échappements (21, 22 ; 61, 61', 62, 62').

10. Appareil électroménager de cuisson à la vapeur selon l'une des revendications 1 à 9, **caractérisé en ce que** le conduit descendant (63) est relié à l'enceinte de cuisson (41) par une entrée (79) dont la section est supérieure à la somme des sections du ou des échappements (61, 61', 62, 62').

11. Appareil électroménager de cuisson à la vapeur selon l'une des revendications 1 à 10, **caractérisé en ce que** le conduit descendant (23 ; 63) est relié à l'enceinte de cuisson (1 ; 41) par une entrée (33 ; 79) agencée à proximité de l'un (22 ; 62) au moins des échappements (21, 22 ; 61, 61', 62, 62').

12. Appareil électroménager de cuisson à la vapeur selon la revendication 11, **caractérisé en ce que** l'un (21 ; 61, 61', 62') au moins des échappements (21, 22 ; 61, 61', 62, 62') est agencé à distance de l'entrée (33 ; 79).

13. Appareil électroménager de cuisson à la vapeur selon les revendications 11 et 12, **caractérisé en ce que** le rapport entre la section du ou des échappements (61, 61', 62') agencés à distance de l'entrée (79) et la section du ou des échappements (62) agencés à proximité de l'entrée (79) est compris entre 1,6 et 2,4.

14. Appareil électroménager de cuisson à la vapeur selon l'une des revendications 1 à 13, **caractérisé en ce que** le ou l'un au moins des échappements (21, 22 ; 61, 61', 62, 62') est ménagé dans un couvercle (20 ; 60) formant la paroi supérieure de l'enceinte de cuisson (1 ; 41).

15. Appareil électroménager de cuisson à la vapeur selon la revendication 14, **caractérisé en ce que** le conduit descendant (23 ; 63) présente une entrée (33 ; 79) agencée plus bas que le ou les échappements (21, 22 ; 61, 61', 62, 62') ménagés dans le couvercle (20 ; 60).

16. Appareil électroménager de cuisson à la vapeur selon la revendication 15, **caractérisé en ce que** l'enceinte de cuisson (41) comporte un récipient de cuisson (51) dans lequel est ménagé au moins une portion du conduit descendant (63) et que le (62) ou l'un des échappements agencés à proximité de l'entrée (79) forme un orifice susceptible de s'emboîter sur le bord supérieur dudit conduit (63) lorsque le couvercle (60) est retourné sur ledit récipient (51).

17. Appareil électroménager de cuisson à la vapeur selon l'une des revendications 15 ou 16, **caractérisé en ce que** l'entrée (79) est formée par une ouverture supérieure du conduit descendant (63) et **en ce que** le sommet de la paroi intérieure du couvercle (60) est concave jusqu'à une nervure (78) interposée entre le sommet du couvercle (60) et le ou l'un des échappements (62), la nervure (78) étant agencée autour de l'entrée (79) lorsque le couvercle (60) ferme l'enceinte de cuisson (41).

18. Appareil électroménager de cuisson à la vapeur selon l'une des revendications 1 à 17, **caractérisé en ce que** le rapport entre la puissance moyenne délivrée par les moyens de chauffe (6 ; 46) pendant la phase initiale de montée en température et la puissance moyenne délivrée par les moyens de chauffe (6') après le déclenchement du détecteur de vapeur (9 ; 9' ; 49) est supérieur ou égal à 1,5.

## Patentansprüche

1. Elektrohaushaltsgerät zum Kochen mit Dampf, mit einer Dampferzeugungseinrichtung (3; 43), die einen Wassertank (5; 45) aufweist, der Heizmitteln (6; 46) zugeordnet ist, einem Kochraum (1; 1'; 41), der von der Dampferzeugungseinrichtung mit Dampf versorgt wird, und einem Dampfdetektor (9; 9'; 49), der Mitteln zur Reduzierung der Leistung der Heizmittel zugeordnet ist, wobei der Kochraum (1; 1'; 41) wenigstens einen Auslaß (21, 22; 21'; 61, 61', 62, 62') nach außen aufweist, **dadurch gekennzeichnet, daß** der Kochraum (1; 1'; 41) durch eine Falleitung (23; 32; 63) mit einer Kammer (24; 24'; 64) des Geräts in Verbindung steht, in welcher der Dampfdetektor (9; 9'; 49) angeordnet ist.

2. Elektrohaushaltsgerät zum Kochen mit Dampf nach Anspruch 1, **dadurch gekennzeichnet, daß** die Dampferzeugungseinrichtung (3; 43) einen Haupttank (4; 44) aufweist, der den Wassertank (5; 45) versorgt, der den Heizmitteln (6; 46) zugeordnet ist.

3. Elektrohaushaltsgerät zum Kochen mit Dampf nach einem der Ansprüche 1 oder 2, **dadurch gekennzeichnet, daß** die Dampferzeugungseinrichtung (3; 43) in einer Heizbasis (2; 2'; 42) angeordnet ist, und daß der Kochraum (1; 1'; 41) bezüglich der Heizbasis (2; 2', 42) abnehmbar ist.

4. Elektrohaushaltsgerät zum Kochen mit Dampf nach Anspruch 3, **dadurch gekennzeichnet, daß** der Dampfdetektor (9; 9'; 49) in der Heizbasis (2; 2'; 42) angeordnet ist.

5. Elektrohaushaltsgerät zum Kochen mit Dampf nach einem der Ansprüche 1 bis 4, **dadurch gekennzeichnet, daß** die Falleitung (23; 63) wenigstens teilweise in einer Seitenwand (25; 65) des Kochraums (1) angeordnet ist.

6. Elektrohaushaltsgerät zum Kochen mit Dampf nach Anspruch 5, **dadurch gekennzeichnet, daß** der Kochraum (1; 41) wenigstens zwei abnehmbare Kochbehälter (11, 12, 13; 51, 52, 53) aufweist, die jeweils einen Teil der Falleitung (23; 63) aufweisen.

7. Elektrohaushaltsgerät zum Kochen mit Dampf nach einem der Ansprüche 1 bis 6, **dadurch gekennzeichnet, daß** die Falleitung (23; 63) wenigstens teilweise in der Heizbasis (2'; 42) angeordnet ist.

8. Elektrohaushaltsgerät zum Kochen mit Dampf nach einem der Ansprüche 1 bis 7, **dadurch gekennzeichnet, daß** die Kammer (24; 64) mit einem Ablaufausgang (34; 76) nach außerhalb des Geräts verbunden ist.

9. Elektrohaushaltsgerät zum Kochen mit Dampf nach einem der Ansprüche 1 bis 8, **dadurch gekennzeichnet, daß** die Falleitung (23; 63) mit dem Kochraum (1; 41) durch einen Eingang (33; 79) verbunden ist, der niedriger als der oder die Auslässe (21, 22; 61, 61', 62, 62') angeordnet ist.

10. Elektrohaushaltsgerät zum Kochen mit Dampf nach einem der Ansprüche 1 bis 9, **dadurch gekennzeichnet, daß** die Falleitung (63) mit dem Kochraum (41) durch einen Eingang (79) verbunden ist, dessen Querschnitt größer als die Summe der Querschnitte des oder der Auslässe (61, 61', 62, 62') ist.

11. Elektrohaushaltsgerät zum Kochen mit Dampf nach einem der Ansprüche 1 bis 10, **dadurch gekennzeichnet, daß** die Falleitung (23; 63) mit dem Kochraum (1; 41) durch einen Eingang (33; 79) verbunden ist, der wenigstens in der Nähe des einen (22; 62) der Auslässe (21, 22; 61, 61', 62, 62') angeordnet ist.

12. Elektrohaushaltsgerät zum Kochen mit Dampf nach Anspruch 11, **dadurch gekennzeichnet, daß** wenigstens der eine (21; 61, 61', 62') der Auslässe (21, 22; 61, 61', 62, 62') im Abstand von dem Eingang (33; 79) angeordnet ist.

13. Elektrohaushaltsgerät zum Kochen mit Dampf nach den Ansprüchen 11 und 12, **dadurch gekennzeichnet, daß** das Verhältnis zwischen dem Querschnitt des oder der Auslässe (61, 61', 62'), die im Abstand von dem Eingang (79) angeordnet sind, und dem Querschnitt des oder der Auslässe (62), die in der Nähe des Eingangs (79) angeordnet sind, zwischen 1,6 und 2,4 liegt.

14. Elektrohaushaltsgerät zum Kochen mit Dampf nach einem der Ansprüche 1 bis 13, **dadurch gekennzeichnet, daß** wenigstens der oder der eine der Auslässe (21, 22; 61, 61', 62, 62') in einem Deckel (20; 60) angeordnet ist, der die obere Wand des Kochraums (1; 41) bildet.

15. Elektrohaushaltsgerät zum Kochen mit Dampf nach Anspruch 14, **dadurch gekennzeichnet, daß** die Falleitung (23; 63) einen Eingang (33; 79) aufweist, der niedriger als der oder die Auslässe (21, 22; 61, 61') angeordnet ist, die in dem Deckel (20; 60) vorgesehen sind.

16. Elektrohaushaltsgerät zum Kochen mit Dampf nach Anspruch 15, **dadurch gekennzeichnet, daß** der Kochraum (41) einen Kochbehälter (51) aufweist, in dem wenigstens ein Abschnitt der Falleitung (63) vorgesehen ist, und daß der (62) oder der eine der Auslässe, die in der Nähe des Eingangs (79) angeordnet sind, eine Öffnung bilden, die auf den oberen Rand der Leitung (63) gesetzt werden kann, wenn der Deckel (60) auf dem Behälter (51) umgedreht ist.

17. Elektrohaushaltsgerät zum Kochen mit Dampf nach einem der Ansprüche 15 oder 16, **dadurch gekennzeichnet, daß** der Eingang (79) durch eine obere Öffnung der Falleitung (63) gebildet ist, und daß der Scheitel der Innenwand des Deckels (60) bis zu einer Rippe (78) konkav ist, die zwischen dem Scheitel des Deckels (60) und dem oder dem einen der Auslässe (62) angeordnet ist, wobei die Rippe (78) um den Eingang (79) angeordnet ist, wenn der Deckel (60) den Kochraum (41) verschließt.

18. Elektrohaushaltsgerät zum Kochen mit Dampf nach einem der Ansprüche 1 bis 17, **dadurch gekennzeichnet, daß** das Verhältnis zwischen der mittleren Leistung, die von den Heizmitteln (6; 46) während der Anfangsphase des Temperaturanstiegs geliefert wird, und der mittleren Leistung, die von den Heizmitteln (6') nach dem Auslösen des Dampfdetektors (9; 9'; 49) geliefert wird, größer oder gleich 1,5 ist.

## Claims

1. Domestic electrical appliance for steam cooking, having a steam production device (3; 43) comprising a water reservoir (5; 45) associated with heating means (6; 46), a cooking enclosure (1; 1'; 41) supplied with steam by the steam production device, and a steam detector (9; 9'; 49) associated with means for reducing the power of the heating means, the cooking enclosure (1; 1'; 41) having at least one exhaust (21, 22; 21'; 61, 61', 62, 62') to the outside, **characterised in that** the cooking enclosure (1; 1'; 41) communicates through a descending conduit (23; 32; 63) with a chamber (24; 24'; 64) of the appliance in which the steam detector (9; 9'; 49) is disposed.

2. Domestic electrical appliance for steam cooking according to Claim 1, **characterised in that** the steam production device (3; 43) has a main reservoir (4; 44) supplying the water reservoir (5; 45) associated with the heating means (6; 46).

3. Domestic electrical appliance for steam cooking according to any of Claims 1 or 2, **characterised in that** the steam production device (3; 43) is arranged in a heating base (2; 2'; 42) and that the cooking enclosure (1; 1'; 41) is removable with respect to the heating base (2; 2'; 42).

4. Domestic electrical appliance for steam cooking according to Claim 3, **characterised in that** the steam detector (9; 9'; 49) is disposed in the heating base (2; 2'; 42).

5. Domestic electrical appliance for steam cooking according to any of Claims 1 to 4, **characterised in that** the descending conduit (23; 63) is provided at least partly in a side wall (25; 65) of the cooking enclosure (1).

6. Domestic electrical appliance for steam cooking according to Claim 5, **characterised in that** the cooking enclosure (1; 41) has at least two removable cooking receptacles (11, 12, 13; 51, 52, 53) each comprising a part of the descending conduit (23; 63).

7. Domestic electrical appliance for steam cooking according to any of Claims 1 to 6, **characterised in that** the descending conduit (32; 63) is at least partly provided in the heating base (2'; 42).

8. Domestic electrical appliance for steam cooking according to one of Claims 1 to 7, **characterised in that** the chamber (24; 64) is connected to a flow outlet (34; 76) to the outside of the appliance.

9. Domestic electrical appliance for steam cooking according to any of Claims 1 to 8, **characterised in that** the descending conduit (23; 63) is connected to the cooking enclosure (1; 41) by an inlet (33; 79) arranged lower than the exhaust or exhausts (21, 22; 61, 61', 62, 62').

10. Domestic electrical appliance for steam cooking according to any of Claims 1 to 9, **characterised in that** the descending conduit (63) is connected to the cooking enclosure (41) by an inlet (79) whose cross-section is greater than the sum of the cross-sections of the exhaust or exhausts (61, 61', 62, 62').

11. Domestic electrical appliance for steam cooking according to any of Claims 1 to 10, **characterised in that** the descending conduit (23; 63) is connected to the cooking enclosure (1; 41) by an inlet (33; 79) arranged close to at least one (22; 62) of the exhausts (21, 22; 61, 61', 62, 62').

12. Domestic electrical appliance for steam cooking according to Claim 11, **characterised in that** at least one (21; 61, 61', 62') of the exhausts (21, 22; 61, 61', 62, 62') is arranged at a distance from the inlet (33; 79).

13. Domestic electrical appliance for steam cooking according to one of Claims 11 or 12, **characterised in that** the ratio between the cross-section of the exhaust or exhausts (61, 61', 62') arranged at a distance from the inlet (79), and the cross-section of the exhaust or exhausts (62) arranged close to the inlet (79), is between 1.6 and 2.4.

14. Domestic electrical appliance for steam cooking according to any of Claims 1 to 13, **characterised in that** the exhaust or at least one of the exhausts (21, 22; 61, 61', 62, 62') is provided in a lid (20; 60) forming the top wall of the cooking enclosure (1; 41).

15. Domestic electrical appliance for steam cooking according to Claim 14, **characterised in that** the descending conduit (23; 63) has an inlet (33; 79) arranged below the exhaust or exhausts (21, 22; 61, 61', 62, 62') provided in the lid (20; 60).

16. Domestic electrical appliance for steam cooking according to Claim 15, **characterised in that** the cooking enclosure (41) comprises a cooking receptacle (51) in which at least one portion of the descending conduit (63) is provided, and **in that** the exhaust (62) or one of the exhausts arranged close to the inlet (79) forms an orifice able to fit on the top edge of said conduit (63) when the lid (60) is turned over on said receptacle (51).

17. Domestic electrical appliance for steam cooking according to one of Claims 15 or 16, **characterised in that** the inlet (79) is formed by a top opening of the descending conduit (63), and **in that** the top of the internal wall of the lid (60) is concave as far as a rib (78) interposed between the top of the lid (60) and the exhaust or one of the exhausts (62), the rib (78) being arranged around the inlet (79) when the lid (60) closes off the cooking enclosure (41).

18. Domestic electrical appliance for steam cooking according to any of Claims 1 to 17, **characterised in that** the ratio between the mean power delivered by the heating means (6; 46) during the initial phase of rise in temperature, and the mean power delivered by the heating means (6') after the triggering of the steam detector (9; 9'; 49), is greater than or equal to 1.5.
